# EUROPEAN PATENT APPLICATION

(11) **EP 2 423 736 A1**
(43) Date of publication of application: **29.02.2012**
(21) Application number: 10785992.8
(22) Date of filing: 19.03.2010
(51) Int. Cl.: G02F 1/1335, G02F 1/13357

(54) **DISPLAY PANEL AND DISPLAY DEVICE**

(30) Priority: 12.06.2009 JP 2009140947
(71) Applicant: Sharp Kabushiki Kaisha, Osaka-shi, Osaka 545-8522 (JP)
(72) Inventor: KUNIMASA, Fumie, Osaka-shi, OSAKA 545-8522 (JP); ISHIDA, Takeshi, Osaka-shi, OSAKA 545-8522 (JP); KADOWAKI, Shinya, Osaka-shi, OSAKA 545-8522 (JP); YASHIRO, Yuhji, Osaka-shi, OSAKA 545-8522 (JP); YUKI, Ryuzo, Osaka-shi, OSAKA 545-8522 (JP); KAWAMURA, Tadashi, Osaka-shi, OSAKA 545-8522 (JP); KAIDA, Kazuya, Osaka-shi, OSAKA 545-8522 (JP); SHIGETA, Hiroaki, Osaka-shi, OSAKA 545-8522 (JP)
(74) Representative: Rocke, Carsten
(86) International application number: PCT/JP2010/054789
(87) International publication number: WO 2010/143461

(57) **Abstract**

A red color filter (13R) includes a first absorbent having an absorption wavelength region in most of a low wavelength region other than the wavelength region of red light (R) emitted by fluorescence and a second absorbent having an absorption wavelength region overlapping with the wavelength region of blue light (B) included in the rest of the wavelength region other than most of the low wavelength region.

## Description

### Technical Field

The present invention relates to a display panel such as a liquid crystal display panel and the like; and a display device that incorporates the display panel.

### Background Art

A liquid crystal display device like a liquid crystal television usually performs color display. Because of this, in a liquid crystal display panel, a filter for transmitting specific-color light is included. For example, a red color filter for transmitting red light, a green color filter for transmitting green light, and a blue color filter for transmitting blue light are included in the liquid crystal display panel.

In a case of such a liquid crystal display panel, if light from a backlight unit is white light, each color filter does not transmit the light that has a color other than the color of itself (i.e, does not transmit about two-thirds of the white light). Because of this, in such a liquid crystal display device, light use efficiency cannot avoid becoming low.

Because of this, nowadays, a liquid crystal display panel 139, which includes fluorescent bodies 111 (111R, 111G, 111B) disclosed in a patent document 1, is developed (see Fig.14). In detail, this liquid crystal display panel 139 includes: a red fluorescent body 111R, a green fluorescent body 111G, and a blue fluorescent body 111B that receive the white light from the backlight unit to emit fluorescent light.

And, the red fluorescent body 111R transmits red light but performs fluorescent light emission by means of part of light other than the red light to emit red light. Besides, the green fluorescent body 111G transmits green light but performs fluorescent light emission by means of part of light other than the green light to emit green light. Besides, the blue fluorescent body 111B transmits blue light but performs fluorescent light emission by means of part of light other than the blue light to emit blue light. Because of this, the fluorescent bodies 111R, 111G and 111B perform fluorescent light emission by means of a component other than the component of the light that the fluorescent bodies 111R, 111G and 111B transmit, so that the light use efficiency increases.

### Citation List

### Patent Literature

PLT1: JP-A-1996-171012

### Summary of Invention

### Technical Problem

In the mean time, a red color filter 113R, a green color filter 113G, and a blue color filter 113B in such liquid crystal display panel 139 cover the red fluorescent body 111R, the green fluorescent body 111G and the blue fluorescent body 111B. And, the color filters 113R, 113G and 113B are so designed as to transmit the light from the fluorescent bodies 111R, 111G and 111B.

However, the color filters 113 (113R, 113G, 113B) cannot avoid transmitting light as well other than the light from the fluorescent bodies 111 (111R, 111G and 111B) in some cases. For example, there is a case where light (outside light) like the sunshine having a wide range of wavelengths pours into the liquid crystal display panel 139.

In such a case, for example, the red color filter 113R is so designed as to transmit the red light only; however, somewhat transmits in some cases light which falls in another wavelength region. Because of this, the red fluorescent body 111R performs fluorescent light emission by means of light other than the light from the backlight unit, which in some cases causes a desired red image not to be displayed on the liquid crystal display panel 139.

The present invention has been made to solve the above problems. And, it is an object of the present invention is to provide a display panel that prevents image deterioration due to outside light.

### Solution to Problem

The display panel includes: a light supply amount control portion that receives first light and controls a supply amount of the first light; a fluorescent body that receives the first light from the light supply amount control portion to perform fluorescent light emission to emit second light; and a filter that receives the second light due to the fluorescent light emission. And, in the display panel, the filter includes a first absorbent and a second absorbent. Here, the first absorbent has an absorption wavelength region that overlaps with most of a low wavelength region other than a wavelength region of the second light, while the second absorbent has an absorption wavelength region that overlaps with a wavelength region of the first light that is included in the remaining wavelength region other than most of the low wavelength region.

According to this, the filter transmits the second light emitted from the fluorescent body. On the other hand, of the light that travels to the fluorescent body via the filter, light falling in a wavelength region (i.e., the wavelength region of the first light) that excites the fluorescent body is blocked by the filter. Because of this, for example, even if unnecessary light (outside light) like the sunshine enters the fluorescent body from outside via the filter, the fluorescent body does not perform fluorescent light emission.

In other words, the filter transmits the light due to the fluorescent light emission from the fluorescent body, while to prohibit the fluorescent body from emitting unnecessary fluorescent light, preventing the light falling in the excitation wavelength region from entering from the outside. As a result of this, the fluorescent body emits a desired amount of light only, so that an image on the display panel is not deteriorated by the outside light.

Here, it is desirable that the first light is blue light and the fluorescent body is a red fluorescent body which emits red light as the second light. Besides, the first light may be ultraviolet light and the fluorescent body may be a red fluorescent body which emits red light as the second light.

In the mean time, there are various materials that are used as the second absorbent; if it is a material that absorbs light which has a wavelength of 450 nm or below, there is no special limitation (here, as an example of the second absorbent, there is a yellow pigment).

In a case where the second absorbent is contained in the filter, even if the blue light and the ultraviolet light is contained in the outside light that enters the fluorescent body via the filter, the light does not reach the fluorescent body. Accordingly, the red fluorescent body does not emit any unnecessary fluorescent light.

Here, sets of the fluorescent body and the filter are partitioned by a partition member in accordance with a color; and it is desirable that the partition member functions as a light blocking member which blocks traveling of the light between adjacent sets.

According to this, the different-color light does not travel between the sets, so that color mixing does not occur. Because of this, color purity of the light traveling from the display panel to the outside increases.

Besides, it is desirable that a side wall of the partition member, which faces an inside of a section partitioned by the partition member, is so inclined as to look upward to allow the partition member to become smaller toward a tip thereof; and the side wall has light reflectiveness.

According to this, the light emitted from the fluorescent body reflects off the side wall and for example travels to the outside via the filter without entering opposite another side wall. In other words, the light does not travel between the side walls and does not become unlikely to travel to the outside. Accordingly, in the display panel, light output efficiency to the outside increases.

Besides, it is desirable that the side wall of the partition member is formed of a metal thin film and the inside of the partition member itself enclosed by the side wall is formed of a material that has a light absorption characteristic.

According to this, in a case where the outside light like the sunshine pours into the filter, the partition member absorbs part of the outside light. Because of this, the partition member alleviates the outside light becoming unnecessary reflected light.

Here, it is possible to say that a display device, which includes: the above display panel; and an illumination device that supplies the first light to the display panel, is also the present invention.

### Advantageous Effects of Invention

In the display panel according to the present invention, the fluorescent body does not emit fluorescent light by means of the outside light, so that the fluorescent body emits desired light only. Accordingly, the display panel does not deteriorate the image quality under the influence of the outside light.

### Brief Description of Drawings

[Fig. 1] is a graph showing a transmission characteristic (vertical axis: transmittance, lateral axis: wavelength) of a red color filter.
[Fig. 2] is a graph showing a radiation characteristic (vertical axis: irradiance, lateral axis: wavelength) of the sunshine that passes through the red color filter shown in Fig. 1.
[Fig. 3] is a graph showing a transmission characteristic (vertical axis: transmittance, lateral axis: wavelength) of a yellow pigment.
[Fig. 4] is a graph showing an excitation spectrum and a light-emission spectrum (lateral axis: wavelength, vertical axis: light intensity) of a red fluorescent body.
[Fig. 5] is a graph showing a radiation characteristic (vertical axis: irradiance, lateral axis: wavelength) of the sunshine.
[Fig. 6] is a graph showing a transmission characteristic (vertical axis: transmittance, lateral axis: wavelength) of a red color filter (a color filter containing chiefly a red pigment) which is a comparison example.
[Fig. 7] is a graph showing a radiation characteristic (vertical axis: irradiance, lateral axis: wavelength) of the sunshine that passes through the red color filter as the comparison example shown in Fig. 6.
[Fig. 8] is an enlarged sectional view of a liquid crystal display device shown in Fig. 9.
[Fig. 9] is a sectional view taken along an A-A' arrow line of a liquid crystal display device shown in Fig. 13.
[Fig. 10] is an enlarged sectional view of a liquid crystal display device shown in Fig. 11.
[Fig. 11] is a sectional view of a liquid crystal display device.
[Fig. 12] is an enlarged sectional view of a liquid crystal display device.
[Fig. 13] is an exploded perspective view of a liquid crystal display device.

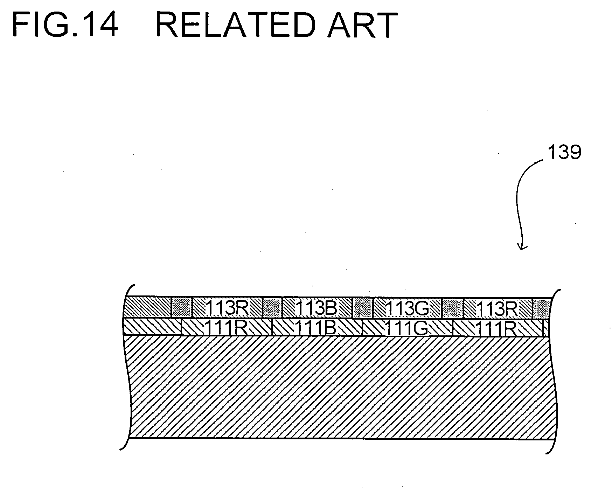

[Fig. 14] is a sectional view of a conventional liquid crystal display panel.

### Description of Embodiments

### [Embodiment 1]

An embodiment 1 is described based on drawings as follows. Here, for convenience, there is a case where a hatching, a member reference number and the like are omitted; in such a case, other drawings are referred to. Besides, a black dot in a drawing means a direction perpendicular to the paper surface.

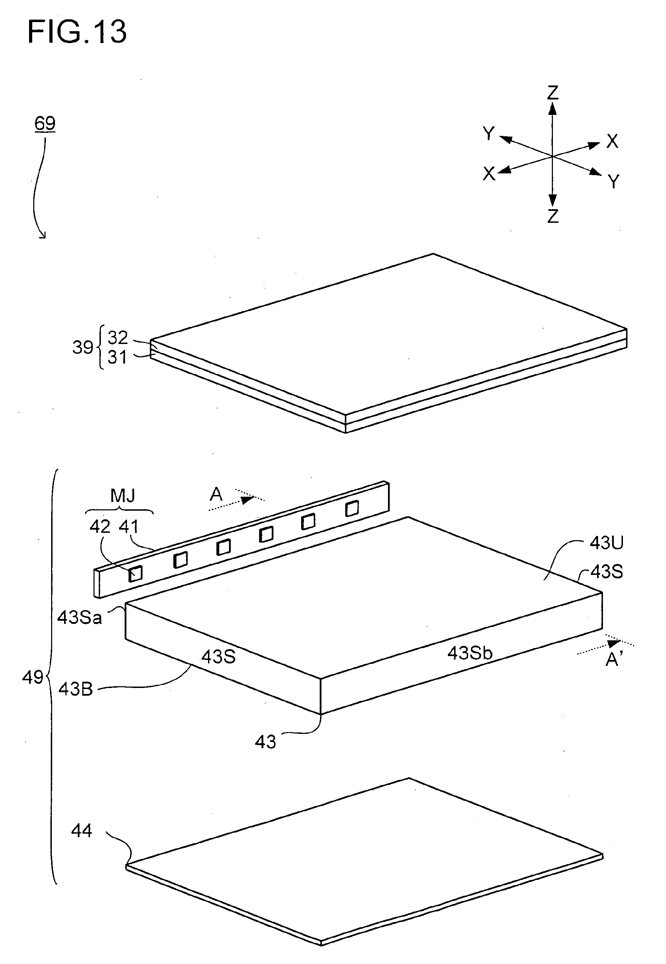

Fig. 13 is an exploded perspective view of a liquid crystal display device 69. As shown in this figure, the liquid crystal display device 69 includes: a liquid crystal display panel 39; and a backlight unit 49.

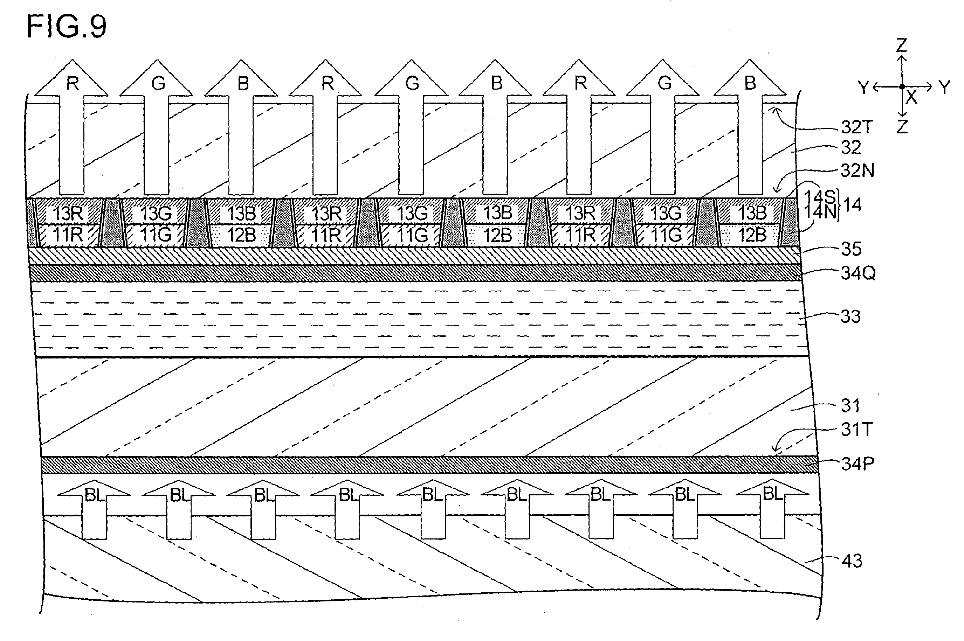

The liquid crystal display panel 39 attaches an active matrix base board 31 that includes switching elements such as a TFT (Thin Film Transistor) and the like, and an opposite base board 32 that faces the active matrix base board 31 to each other by means of a seal member (not shown). And, liquid crystal 33 is injected into a gap between both base boards 31, 32 (see Fig. 9 described later). Here, materials of the active matrix base board 31 and the opposite base board (transmission base board) 32 are not especially limited; for example, there is glass (details of the liquid crystal display panel 39 are described later).

The liquid crystal display panel 39 is a non-light emitting type display panel, so that the liquid crystal display panel 39 receives light (backlight BL: see Fig. 9 described later) from the backlight unit 49, thereby fulfilling a display function. Because of this, if the light from the backlight unit 49 is able to be evenly shined onto the entire surface of the liquid crystal display panel 39, the display quality of the liquid crystal display panel 39 increases. Here, in the liquid crystal display device 39, the orientation of the liquid crystal 33 is adjusted, whereby the transmittance of the liquid crystal 33 partially changes (in short, the amount of light supplied to the outside changes) and a displayed image changes. Because of this, the liquid crystal (liquid crystal layer) 33 is also called a light supply amount control portion.

Next, the backlight unit 49, which supplies the light to the liquid crystal display panel 39, is described. The backlight unit 49 includes: an LED module (light source module) MJ; a light guide plate 43; and a reflection sheet 44.

The LED module MJ is a module that emits light and includes: a mount base board 41; and an LED (Light Emitting Diode) 42 that is mounted on an electrode formed on a mount surface of the mount base board 41 and receives electricity supply to emit light.

Besides, it is desirable that to secure a light amount, the LED module MJ includes a plurality of the LEDs (point light source) 42; further, it is desirable that the LEDs 42 are arranged parallelly in a line. However, in the figure, for convenience, only part of the LEDs 42 are shown (hereinafter, the arrangement direction of the LEDs 42 is called an X direction.).

Besides, as the light color emitted from the LED 42, there are various colors such as a red, a green and the like: however, the LED 42 in Fig. 13 is a gallium nitride blue light emitting LED 42 that emits blue light (light whose wavelength is from about 410 nm to about 500 nm) (here, such blue light is called first light).

The light guide plate 43 is a plate-shape member that has: a side surface 43S; a top surface 43U and a bottom surface 43B which are so situated oppositely as to sandwich the side surface 43S. And, a surface (light receiving surface 43Sa) of the side surface 43S faces a light-emitting end of the LED 42, thereby receiving the light from the LED 42. The received light undergoes multiple reflection in the inside of the light guide plate 43 and goes out as surface light from the top surface (output surface) 43U to the outside.

Besides, hereinafter, the side surface 43S opposite to the light receiving surface 43Sa is called as an opposite surface 43Sb; and the direction from the light receiving surface 43Sa to the opposite surface 43Sb is called a Y direction (especially, this Y direction intersects with the X direction (e.g., intersects at right angles)).

The reflection sheet 44 is so situated as to be covered by the light guide plate 43. And, a surface of the reflection sheet 44 that faces the bottom surface 43B of the light guide plate 43 serves as a reflection surface. Because of this, this reflection surface reflects the light from the LED 42 and the light propagating in the inside of the light guide plate 43 back into the light guide plate 43 without leaking both light (in detail, via the bottom surface 11B of the light guide plate 43).

Here, in the above backlight unit 49, the reflection sheet 44 and the light guide plate 43 are stacked up in this order (here, the stacked-up direction is called a Z direction; besides, it is desirable that the X direction, the Y direction and the Z direction are in a relationship to intersect with each other at right angles.). And, the light from the LED 42 is changed to the surface backlight BL by the light guide plate 43 and goes out; the surface light BL reaches the liquid crystal display panel 39, whereby the liquid crystal display panel 39 displays an image.

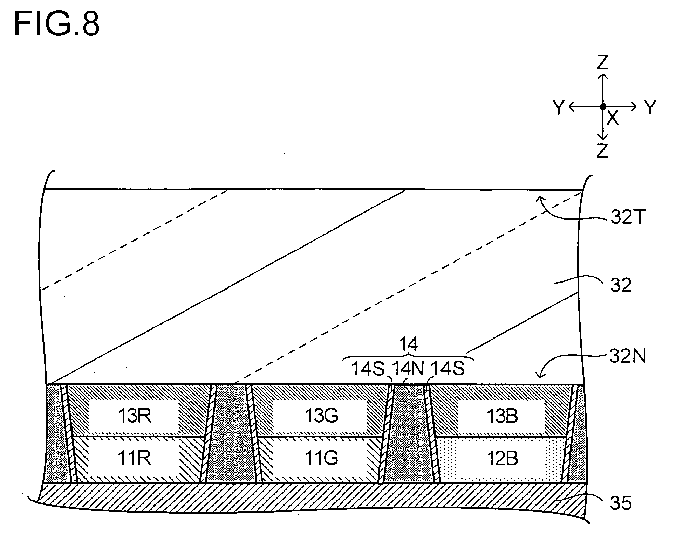

Here, the liquid crystal display panel 39 is described in detail using Fig. 8 and Fig. 9. Fig. 9 is a sectional view seen along an A-A' arrow line in Fig. 13; Fig. 8 is a partially enlarged view of Fig. 9. As shown in Fig. 9, the liquid crystal display panel 39, in addition to the active matrix base board 31 and the opposite base board 32 that sandwich the liquid crystal layer 33, includes: color filters 13 (13R, 13G, 13B); fluorescent bodies 11 (11R, 11G); a scattering body 12; a black matrix 14; a band-pass filter 35; and light polarization films 34 (34P, 34Q).

Here, in the opposite base board 32, first, the color filter 13 is formed on a surface 32N that faces the active matrix base board 31. Thereafter, the fluorescent bodies 11 and the scattering bodies 12 are so formed as to overlie the color filters 13; further, so as to partition the fluorescent bodies 11 and the scattering bodies 12, the black matrix 14 is formed on the surface 32N of the opposite base board 32. Besides, the band-pass filter 35 for selectively transmitting blue light B is so formed as to overlie the fluorescent bodies 11, the scattering bodies 12, and black matrix 14. Further, so as to overlie the band-pass filter 35, the light polarization film 34Q is formed.

And, the opposite base board 32, on which the various members are stacked up on the surface 32N, and the active matrix base board 31 sandwich the liquid crystal layer 33 (here, the member closest to the active matrix base board 31 is the light polarization film 34Q). Besides, an electrode (not shown) for applying a voltage to the liquid crystal layer 33 also is interposed between the opposite base board 32 and the active matrix base board 31.

On the other hand, the light polarization film 34P, without being interposed between the opposite base board 32 and the active matrix base board 31, is mounted on a surface 31T of the active matrix base board 31 that faces the backlight unit 49.

Because of this, the light polarization films 34 (34P, 34Q) sandwich the active matrix base board 31 and the liquid crystal layer 33. In other words, between the active matrix base board 31 and the backlight unit 49, one light polarization film 34P is interposed; and between the liquid crystal layer 33 and the opposite base board 32, the other light polarization film 34Q is interposed.

The color filters 13 are dispersed and disposed on the opposite base board 32. The red color filters 13R, the green color filters 13G and the blue color filters 13B are dispersed on the opposite base board 32; however, it is desirable that they are arranged with a specific regularity. For example, there are: a delta arrangement in which the red fluorescent body 11R, the green fluorescent body 11G and the scattering body 12 are arranged in a triangular shape; a stripe arrangement in which the red fluorescent body 11R, the green fluorescent body 11G and the scattering body 12 are alternately arranged in a line; and a mosaic arrangement in which the red fluorescent body 11R, the green fluorescent body 11G and the scattering body 12 are arranged in a mosaic shape.

Besides, the materials of the color filters 13R, 13G and 13B are not especially limited. For example, there is an alkali-soluble radical polymerizable negative resist which contains, for example, an alkali-soluble polymer, a multi-functional monomer and a pigment ingredient (also inclusive of an ingredient such as a dispersant and the like necessary for pigment dispersion), which is an example of the material of the color filter 13 (here, the material of the color filter is formed on the fluorescent body 11R, 11G and the scattering body 12 with a photolithography method.).

The fluorescent body 11 is divided into two categories: one of which, that is, the red fluorescent body 11R is disposed on the red color filter 13R; and the other of which, that is, the green fluorescent body 11G is disposed on the green color filter 13G.

In detail, the red color filter 13R for transmitting the red light R is so disposed as to overlie the red fluorescent body 11R, thereby being interposed between the red fluorescent body 11R and the opposite base board 32. Likewise, the green color filter 13G for transmitting the green light G is so disposed as to overlie the green fluorescent body 11G, thereby being interposed between the green fluorescent body 11G and the opposite base board 32

And, the fluorescent body 11 receives the blue light B to emit fluorescent light. In detail, the red fluorescent body 11R1 receives the blue light to emit the red light R which has a wavelength of about 620 nm. The other green fluorescent body 11G receives the blue light to emit the green light G which has a wavelength of about 550 nm (here, the light emitted from the fluorescent bodies 11R, 11G is called second light).

Here, the fluorescent body 11 is not especially limited; however, considering that an edge of one picture element (PIXEL) is about 30 µm or below, it is desirable that the fluorescent body 11 is formed of particles each having a particle diameter (micro-particle material) of 1 µm or below; for example, there are a nano-particle fluorescent body and an organic fluorescent body.

In detail, the red fluorescent body 11R contains a compound such as InP, CdSe or the like, for example. This compound is mixed with an acrylic resin and the like; further, the mixture is applied onto the red color filter 13R by means of a screen printing apparatus, an inkjet apparatus or a photolithography method, whereby the red fluorescent body 11R is formed.

Besides, the green fluorescent body 11G contains a compound such as InP, CdSe or the like, for example. This compound is mixed with an acrylic resin and the like; further, the mixture is applied onto the green color filter 13G by means of a screen printing apparatus, an inkjet apparatus or a photolithography method, whereby the green fluorescent body 11G is formed.

The scattering body 12 is disposed on the blue color filter 13B. And, this scattering body 12 receives the light (blue light B) that passes through the band-pass filter 35 to scatter the light (here, the scattering body 12 scatters the blue light B that passes through the band-pass filter 35, so that the scattering body 12 is called a scattering body 12B.).

Here, the material and shape of the scattering body 12B are not especially limited. For example, the scattering body 12B is formed of a positive resin of acrylic or the like that has transmissiveness to the blue light B. In other words, the resin is applied onto the blue color filter by means of a screen printing apparatus, an inkjet apparatus or a photolithography method, whereby the scattering body 12B is formed.

The black matrix 14 is a light blocking member in which a side wall 14S is formed of a light reflection member and the inside enclosed by the side walls 14S is formed of a light absorption member 14N (here, the side wall 14S is a metal thin film formed of, for example, aluminum which has light reflectiveness.). And, this black matrix 14 is interposed between the band-pass filter 35 and the opposite base board 32, and separately encloses: the set of the stacked-up red fluorescent body 11R and the red color filter 13R; the set of the stacked-up green fluorescent body 11G and the green color filter 13G; and the set of the stacked-up scattering body 12B and the blue color filter 13B to partition them (here, a partitioned region serves as a pixel).

Here, the traveling of the light which enters the liquid crystal display panel 39 is as follows. First, of the light from the backlight unit 49, only specific polarized light passes through the light polarization film 34P; and the light travels to the active matrix base board 31, further, to the liquid crystal layer 33. Next, of the light passing through the liquid crystal layer 33, only specific polarized light passes through the light polarization film 34Q and travels to the band-pass filter 35.

And, this band-pass filter 35 selectively transmits the blue light B of the light that passes through the light polarization film 34Q. Because of this, the red fluorescent body 11R and the green fluorescent body 11G receive the light (blue light B) that passes through the band-pass filter 35 to emit the fluorescent light, while the scattering body 12B receives the light (blue light B) that passes through the band-pass filter 35 to scatter the light.

Here, most of the light emitted from the fluorescent bodies 11R, 11G travels to go away from the band-pass filter 35. However, part of the light emitted from the fluorescent bodies 11R, 11G travels to the band-pass filter 35 and reflects off the band-pass filter 35 to travel to the outside (in detail, goes away from the band-pass filter 35 to travel to the opposite base board 32).

The color filters 13R, 13G and 13B transmit the light that travels from the red fluorescent body 11R, the green fluorescent body 11G and the scattering body 12B. Because of this, a loss due to the light passing through the color filter 13 is extremely small (in other words, the light color deepness (purity) increases.).

Here, the red color filter 13R covering the red fluorescent body 11R and the green color filter 13G covering the green fluorescent body 11G have a function as well to block a partial light component of the light (e.g., the sunshine) that enters the liquid crystal display panel 39 from the outside. For example, the color filters 13R, 13G block most of the light that is part of the light (outside light) from the outside and corresponds to excitation wavelength regions of the fluorescent bodies 11R, 11G. In other words, the color filters 13R, 13G has the function to block part of the outside light, thereby prohibiting the fluorescent bodies 11R, 11G from emitting fluorescent light by means of the outside light (details are described later).

Besides, the black matrix 14 reflects the light by means of the side wall 14S, so that the light does not travel from one color filter 13 to another color filter 13 via an interface between the color filters 13. In other words, the black matrix 14 secures the light blocking characteristic for every pixel (in short, light-color mixing is prevented.).

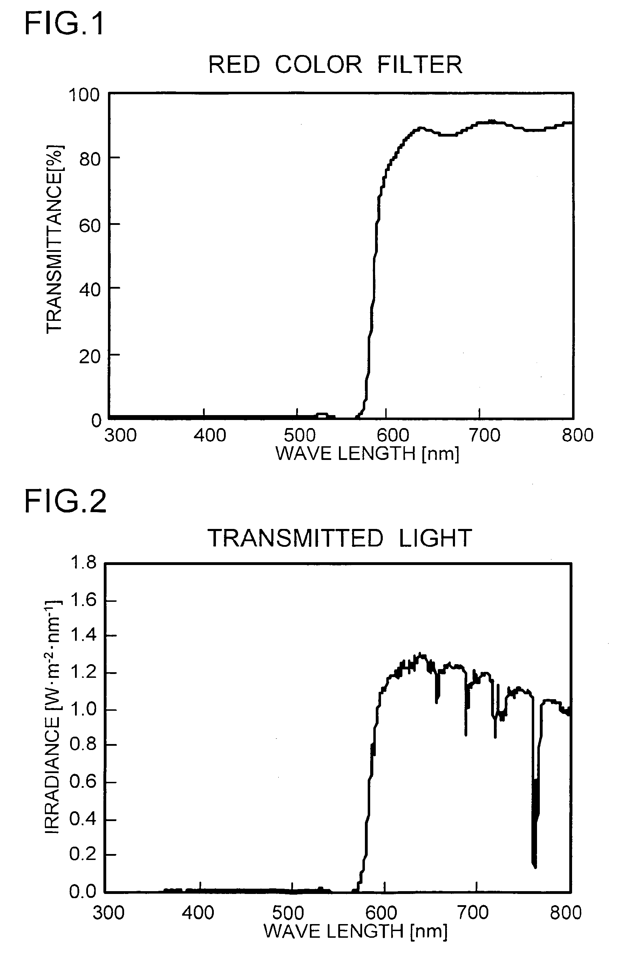

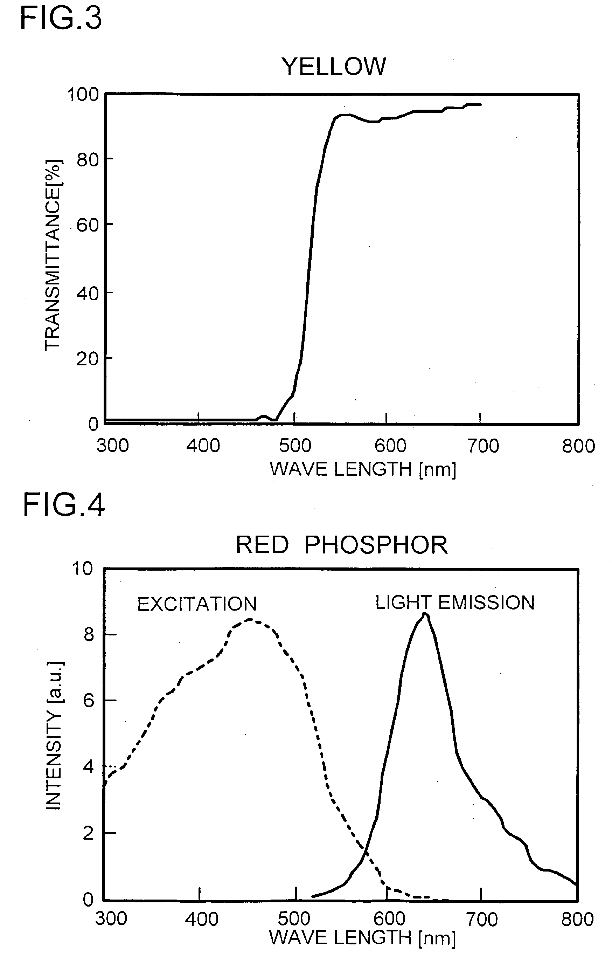

Here, the red fluorescent body 11R and the red color filter 13R are described in detail using Fig. 1 to Fig. 7. The red fluorescent body 11R, as shown in Fig. 4, has an excitation wavelength region of a wavelength of about 350 nm to a wavelength of about 500 nm, and has a light-emitting wavelength region of a wavelength of about 620 nm to a wavelength of about 660 nm.

In other words, in a case where the LED 42 incorporated in the backlight unit 49 emits the blue light (light having a wavelength of about 410 nm to about 500 nm), it is understood that the red light R is emitted from the red fluorescent body that receives the blue light.

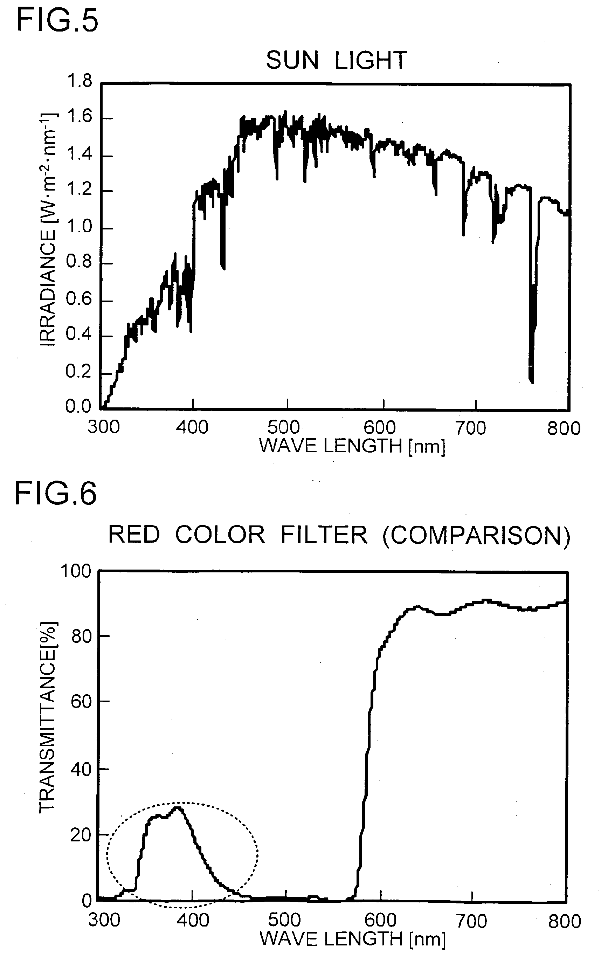

However, the light entering the red fluorescent body 11R is not always the light from the backlight unit 49; the outside light (the sunshine) having a radiation characteristic as shown in Fig. 5 also reaches the red fluorescent body 11R via the red color filter 13R. As described above, in the case where the outside light reaches the red fluorescent body 11R, there is a risk that the red fluorescent body 11R emits fluorescent light by means of the light different from the light from the backlight unit 49.

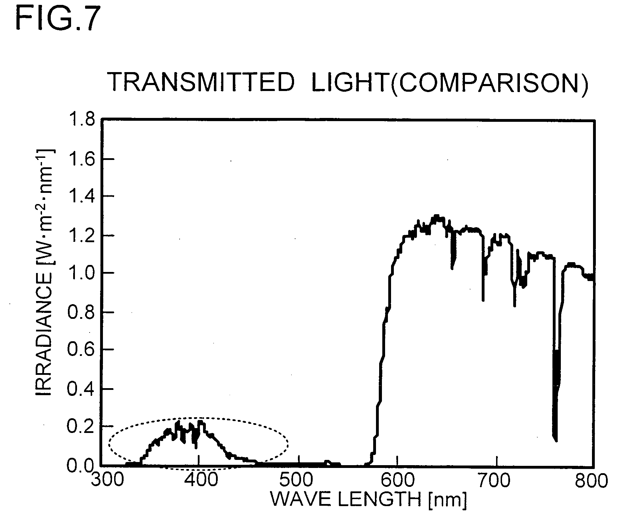

For example, there is a case where a red color filter 13R' as a comparison example (for convenience, a mark " ' " is attached to the member number in some cases), as shown in Fig. 6, has a transmission characteristic to transmit light (see a region encircled by a dotted line) which has a wavelength of about 350 nm to about 420 nm; and transmit light which has a wavelength of about 570 nm or more. In such a case, the radiation characteristic of the sunshine shown in Fig. 5 which passes through the red color filter 13R' is as shown in Fig. 7. In other words, the light having the radiation characteristic as shown in Fig. 7 reaches the red fluorescent body 11R. Because of this, the light having a wavelength of about 350 nm to about 420 nm reaches the red fluorescent body 11R (see a region encircled by a dotted line).

Because of this, the red fluorescent body 11R having the characteristic as shown in Fig. 4 receives not only the light from the backlight unit 49 but also the outside light, thereby emitting fluorescent light. And, the fluorescent light due to the outside light is the light that is not designed, which causes image-quality deterioration of the liquid crystal display panel 39.

Because of this, a yellow pigment having a transmission characteristic as shown in Fig. 3 is added to the red color filter 13R' having the transmission characteristic shown in Fig. 6. Such a yellow pigment (second absorbent) is, for example, an isoindoline organic pigment, which absorbs light that has a wavelength of about 450 nm or below and transmits light that surpasses the wavelength region (the wavelength of about 450 nm) (in contrast, the transmission characteristic as shown in Fig. 6, that is, the characteristic, which has an absorption wavelength region in a wide wavelength region that is a low wavelength region other than the wavelength region of the red light R but is not able to sufficiently absorb the light that has a wavelength of about 450 nm or below, is due to a quinacridone organic pigment, an anthraquinone organic pigment, or a mixed pigment of these pigments (here, these pigments are called a first absorbent)).

In other words, the finished red color filter 13R contains the first absorbent and the second absorbent. In detail, the first absorbent has an absorption wavelength region that overlaps with most of the low wavelength region other than the wavelength region of the red light generated by the fluorescent light emission. Further, the second absorbent has an absorption wavelength region that overlaps with the wavelength region of the blue light B which is contained in the remaining wavelength region other than most of the wavelength region in the low wavelength region (in short, comparing a degree to which the first absorbent absorbs the blue light B and a degree to which the second absorbent absorbs the blue light B with each other, the second absorbent is higher than the first absorbent). And, the above red color filter 13R has a transmission characteristic as shown in Fig. 1.

This red color filter 13R transmits the light that has a wavelength of about 570 nm or more and absorbs the light that has a wavelength below about 570 nm. And, in the case of this red color filter 13R, even if the sunshine having the radiation characteristic as shown in Fig. 5 enters the red color filter 13R, the radiation characteristic of the light that passes through is as shown in Fig. 2. Accordingly, most of the light reaching the red fluorescent body 11R is the light having a wavelength of about 570 nm or more; and the light having a wavelength of about 350 nm to about 420 nm becomes unlikely to reach the red fluorescent body 11R.

According to this, even if the red fluorescent body 11R receives the outside light via the red color filter 13R, the red fluorescent body 11R does not receive very much the light that causes the fluorescent light emission. Because of this, the fluorescent light emission amount of the red fluorescent body 11R that receives the transmitted light shown in Fig. 2 is about one third of the fluorescent light emission amount of the red fluorescent body 11R that receives the transmitted light shown in Fig. 7.

Because of this, the red fluorescent body 11R does not emit fluorescent light by means of the outside light but emits fluorescent light by means of the blue light B that travels from the backlight unit 49; and the fluorescent light travels to the liquid crystal display panel 39. Accordingly, the liquid crystal display panel 39 is not influenced by the fluorescent light due to the outside light and the image-quality deterioration does not occur (in other words, the image quality of the liquid crystal display device 69 increases.).

### [Embodiment 2]

An embodiment 2 is described. Here, members, which have the same functions as those of members used in the embodiment 1, are indicated by the same reference numbers and the description of them is skipped.

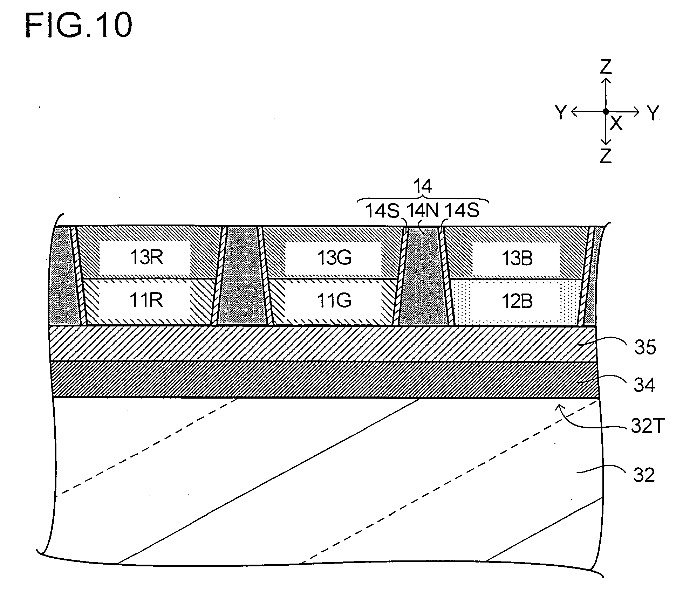

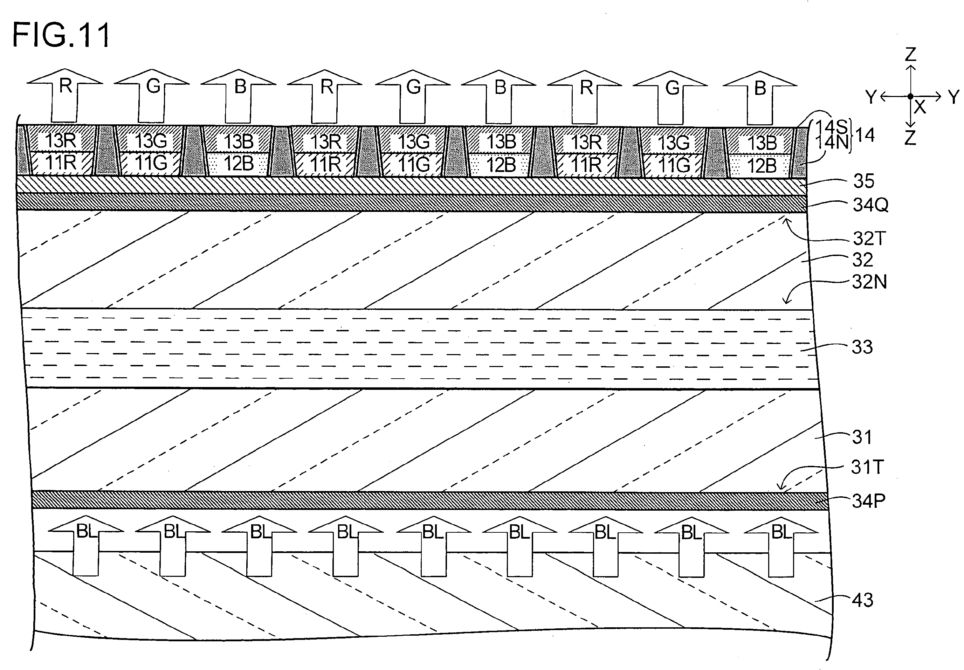

In the liquid crystal display panel 39 according to the embodiment 1, the color filter 13, the fluorescent body 11 (red fluorescent body 11R, green fluorescent body 11G), the scattering body 12B, the black matrix 14, the band-pass filter 35 and the light polarization film 34Q are interposed between the opposite base board 32 and the liquid crystal layer 33. However, this is not limiting. For example, the liquid crystal display panel 39 as shown in Fig. 10 and Fig. 11 may be used. Here, Fig. 11 is a sectional view of the liquid crystal display panel 39 and Fig. 10 is a partially enlarged view of Fig. 11.

As shown in these figures, in the opposite base board 32 of the liquid crystal display panel 39, the light polarization film 34Q, the band-pass filter 35, the black matrix 14, the fluorescent body 11 (red fluorescent body 11R, green fluorescent body 11G), the scattering body 12B, and the color filter 13 are mounted on a surface 32T that is away from the liquid crystal layer 33.

In detail, first, the light polarization film 34Q is formed on the surface 32T of the opposite base board 32. Thereafter, the band-pass filter 35 is so formed as to overlie the light polarization film 34Q; further, the black matrix 14 having a matrix shape and the like is formed on the band-pass filter 35. And, the fluorescent body 11 or the scattering body 12B is formed in an inside partitioned by the black matrix 14. Thereafter, the red color filter 13R is so formed as to overlie the red fluorescent body 11R; the green color filter 13G is so formed as to overlie the green fluorescent body 11G; and the blue color filter 13B is so formed as to overlie the scattering body 12B.

In the case of such liquid crystal display panel 39, like the liquid crystal display panel 39 according to the embodiment 1, first, of the light from the backlight unit 49, only specific polarized light passes through the light polarization film 34P; and the light travels to the active matrix base board 31, next, to the liquid crystal layer 33, further, to the opposite base board 32. And, of the light passing through the opposite base board 32, only specific polarized light passes through the light polarization film 34Q and travels to the band-pass filter 35. And, the process in which the light travels from the band-pass filter 35 and passes through the color filter 13 is the same as the liquid crystal display panel 39 according to the embodiment 1.

Accordingly, even in the liquid crystal display panel 39 according to the embodiment 2, if the red color filter 13R is the same as the red color filter 13R that is described in the embodiment 1, the following functions and effects are obtained. In other words, the red fluorescent body 11R hardly emits fluorescent light by means of the outside light but emits fluorescent light by means of the blue light B that travels from the backlight unit 49; and the fluorescent light travels to the liquid crystal display panel 39. Accordingly, the liquid crystal display panel 39 is not influenced by the fluorescent light due to the outside light and the image-quality deterioration does not occur (in other words, also in the liquid crystal display panel 39 according to the embodiment 2, the same functions and effects as the liquid crystal display panel 39 according to the embodiment 1 are obtained.).

However, in the liquid crystal display panel 39 according to the embodiment 2, the light polarization film 34Q is disposed on the surface 32T (surface 32T closest to the outside) of the opposite base board 32. Because of this, this light polarization film is mounted more easily than mounting the light polarization film 34Q between the active matrix base board 31 and the opposite base board 32. In addition, it becomes possible to mount a light polarization film that has a relatively high light polarization characteristic.

### [Embodiment 3]

An embodiment 3 is described. Here, members, which have the same functions as those of members used in the embodiments 1 and 2, are indicated by the same reference numbers and the description of them is skipped.

The light source of the backlight unit 49 in the embodiments 1, 2 are the LED 42 that emits the blue light which has a wavelength of about 410 nm to about 500 nm. However, this is not limiting. For example, the LED 42 may be the ultraviolet rays emitting LED 42 that has a peak wavelength in a range of about 360 nm to about 410 nm and emits ultraviolet rays (first light) (here, such ultraviolet rays emitting LED 42 also is, like the blue light emitting LED 42 for example, a gallium nitride semiconductor light emitting element).

In the case of such LED 42, in the liquid crystal display device 69, the band-pass filter 35 transmits the ultraviolet rays (UV), but reflects the light that falls in other wavelength regions. Besides, the red fluorescent body 11R and the green fluorescent body 11G receive the ultraviolet rays (UV) to emit fluorescent light.

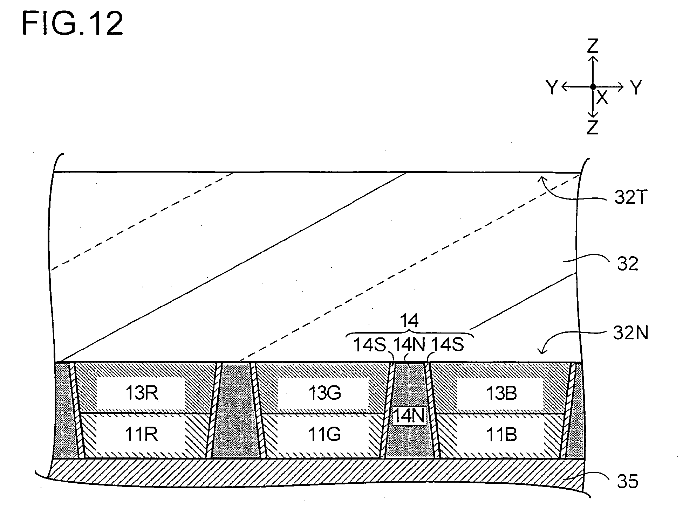

In other words, the red fluorescent body 11R and the green fluorescent body 11G, based on the ultraviolet rays (UV), emit the red light and the green light, respectively. Here, in a case where the ultraviolet rays emitting LED 42 is included in the backlight unit 49, instead of the scattering body 12B as shown in Fig. 8, as shown in Fig. 12, a blue fluorescent body 11B, which receives the ultraviolet rays (UV) to emit fluorescent light, is included in the liquid crystal display panel 39. According to this, by means of the red light R from the red fluorescent body 11R, the green light G from the green fluorescent body 11G and the blue light B from the blue fluorescent body 11B, a color image on the liquid crystal display panel 39 is formed with a high quality. Because of this, also in the liquid crystal display panel 39 according to the embodiment 3, the same functions and effects as those in the liquid crystal display panel 39 according to the embodiments 1, 2 are obtained.

### [Other Embodiments]

Here, the present invention is not limited to the above embodiments, and various modifications are possible without departing from the spirit of the present invention.

For example, the light source incorporated in the liquid crystal display device 69 is not limited to the LED 42, and a light source and the like, which are formed of a fluorescent lamp or a self-light emitting material such as an organic EL (ElectroLuminescence) element or an inorganic EL, may be used.

Besides, in the above description, as the member that controls the amount of the light (backlight) supplied from the backlight unit 49 to the outside, the liquid crystal layer 33 is used. However, the member that changes the amount of the light supplied to the outside is not limited to the liquid crystal layer 33. For example, a MEMS (Micro Electro Mechanical Systems) element may be used as the member (light-supply amount control portion) that changes the amount of the light supplied to the outside.

Besides, the shape of the black matrix 14 included in the liquid crystal display device 39 is not especially limited. For example, the side surface 14S of the black matrix 14 may be perpendicular to the surface of the band-pass filter 35, whereby the black matrix 14 may have a rectangular-parallelepiped shape. The reason is that according to even this, the black matrix 14 partitions the sets of the fluorescent body 11 and the color filter 13 in accordance with the colors; and functions as a light blocking member that blocks the traveling of the light between the adjacent sets.

However, as shown in Fig. 8 to Fig. 12, it is desirable that in the black matrix 14, the side wall 14S of the black matrix 14, which faces the inside of the section partitioned by the black matrix 14 itself, is so inclined and tapered as to look up to the outside (e.g., the opposite base board 32 in the case of the liquid crystal display panel 39 shown in Fig. 8 and Fig. 12) and become small toward the tip.

According to this, the incident angle is different when the light from the fluorescent body 11 enters the tapered side wall 14S of the black matrix 14 versus when the light from the fluorescent body 11 enters the side wall 14S perpendicular to the band-pass filter 35. In detail, the incident angle becomes large when the light from the fluorescent body 11 enters the tapered side wall 14S of the black matrix 14; and, for example, the reflected light travels to the opposite base board 32 without entering the other opposite side wall 14S. In other words, such liquid crystal display panel 39 is able to increase the light output efficiency to the outside.

Here, In the black matrix 14, the side wall 14S is formed of a metal thin film and the like to have the light reflectiveness; on the other hand, the inside of black matrix 14 itself enclosed by the side wall 14S is formed of the material (light absorption member; e.g., a black resin) 14N that has the light absorption characteristic. Because of this, in a case where the outside light pours into the color filter 13, the black matrix 14 absorbs part of the outside light. Because of this, the black matrix 14 alleviates the outside light becoming unnecessary reflected light. Because of this, the display quality of the liquid crystal display panel 39 increases.

### Reference Signs List

- 11: fluorescent body
- 11R: red fluorescent body
- 11G: green fluorescent body
- 11B: blue fluorescent body
- 12B: scattering body
- 13: color filter (filter)
- 13R: red color filter
- 13G: green color filter
- 13B: blue color filter
- 14: black matrix (partition member)
- 14S: side wall of black matrix
- 14N: light absorption member contained in black matrix
- 31: active matrix base board
- 32: opposite base board
- 33: liquid crystal (light supply amount control portion)
- 34: light polarization film
- 35: band-pass filter
- 39: liquid crystal display panel (display panel)
- MJ: LED module
- 42: LED (light source)
- 43: light guide plate
- 44: reflection sheet
- 49: backlight unit (illumination device)
- 69: liquid crystal display device (display device)

## Claims

1. A display panel comprising:
a light supply amount control portion that receives first light and controls a supply amount of the first light;
a fluorescent body that receives the first light from the light supply amount control portion to perform fluorescent light emission to emit second light; and
a filter that receives the second light due to the fluorescent light emission; wherein the filter includes:
a first absorbent that has an absorption wavelength region that overlaps with most of a low wavelength region other than a wavelength region of the second light; and
a second absorbent that has an absorption wavelength region that overlaps with a wavelength region of the first light that is included in a remaining wavelength region other than most of the low wavelength region.

2. The display panel according to claim 1, wherein
the first light is blue light and the fluorescent body is a red fluorescent body which emits red light as the second light.

3. The display panel according to claim 1, wherein
the first light is ultraviolet light and the fluorescent body is a red fluorescent body which emits red light as the second light.

4. The display panel according to claim 2 or 3, wherein the second absorbent absorbs light which has a wavelength of 450 nm or below

5. The display panel according to claim 4, wherein the second absorbent is a yellow pigment.

6. The display panel according to any one of claims 1 to 5, wherein
sets of the fluorescent body and the filter are partitioned by a partition member in accordance with a color; and
the partition member functions as a light blocking member which blocks traveling of the light between adjacent sets.

7. The display panel according to claim 6, wherein
a side wall of the partition member, which faces an inside of a section partitioned by the partition member, is so inclined and tapered as to look upward and become smaller toward a tip; and
the side wall has light reflectiveness.

8. The display panel according to claim 7, wherein
the side wall of the partition member is formed of a metal thin film; and
an inside of the partition member enclosed by the side wall is formed of a material that has a light absorption characteristic.

9. A display device coprising:
the display panel according to any one of claims 1 to 8; and
an illumination device that supplies the first light to the display panel.
